# EUROPÄISCHE PATENTSCHRIFT

(11) **EP 1 179 683 B1**
(45) Veröffentlichungstag und Bekanntmachung des Hinweises auf die Patenterteilung: **21.12.2005**
(21) Anmeldenummer: 01118352.2
(22) Anmeldetag: 27.07.2001
(51) Int. Cl.: F16B 11/00, F16B 5/00, A47B 47/03, A47B 55/00

(54) **Verbindung zwischen Bauelementen für Gehäuse oder Verkleidungen von Haushaltsgeräten bzw.-einrichtungen**
Connection between elements for housings or coverings of household appliances or devices
Connection entre éléments pour des boîtiers ou des revêtements d'appareils ménagers ou dispositifs

(30) Priorität: 10.08.2000 DE 20013813 U
(43) Veröffentlichungstag der Anmeldung: 13.02.2002
(73) Patentinhaber: BSH Bosch und Siemens Hausgeräte GmbH, 81739 München (DE)
(72) Erfinder: Reiff, Udo Dipl.-Ing.(FH), 75438 Knittlingen (DE); Klemm, Jochen Dipl.-Ing.(FH), 75053 Gondelsheim (DE)

(56) Entgegenhaltungen:
- EP-A- 0 507 343
- DE-A- 4 202 391
- US-A- 3 192 671

## Beschreibung

Die Erfindung betrifft eine Verbindung zwischen Bauelementen für Gehäuse oder Verkleidung von Haushaltsgeräten bzw. -einrichtungen mit den Merkmalen des Oberbegriffs des Anspruchs 1. Eine solche Verbinding ist aus der DE-A-42 02 391 bekannt.
Aus dem Markt sind weitere nicht lösbare Verbindungen von Gehäuse- oder Verkleidungsteilen, z.B. bei Herden durch Schweißen oder Kleben bekannt. Um eine sichere und feste Verbindung zu erzielen, erfolgen diese Verbindungen mit möglichst großer Verbindungsfläche Fügeteil an Fügeteil. Nachteil dieser Lösung ist das fertigungsbedingte Toleranzen die nachträgliche Montage an Haushaltsgeräten oder -einrichtungen erschweren bzw. in vielen Fällen verhindern, was zu Nacharbeiten oder einem erhöhten Ausschuß führt.

Aufgabe der vorliegenden Erfindung war, die Nachteile des Standes der Technik zu überwinden und eine nicht lösbare Verbindung zwischen Bauelementen für Gehäuse oder Verkleidungen von Haushaltsgeräten oder -einrichtungen zu schaffen, die eine ausreichende Flexibilität aufweist um Fertigungstoleranzen auszugleichen.

Ziel der Erfindung war die Steigerung der Effektivität der Arbeit durch eine Erleichterung der Montagearbeit und die Vermeidung von Nacharbeit.

Aufgabe und Ziel der Erfindung wurden dadurch gelöst, dass eine Verbindung zwischen Bauelementen für Gehäuse oder Verkleidungen von Haushaltsgeräten bzw. -einrichtungen geschaffen wurde, bei der an einem ersten der Bauelemente eine Aufnahmenut zur Anordnung des anderen zweiten Bauelementes angeordnet ist, wobei die Aufnahmenut aus zwei Schenkeln gebildet wird und einer der Schenkel derart geformt ist, dass zwischen diesem Schenkel und dem in der Aufnahmenut angeordneten Bauelement eine Aufnahmemulde angeordnet ist, in der eine Klebstoffwulst zur Verbindung der beiden Bauelemente angeordnet ist und dass die Aufnahmemulde randseitig an einem Schenkel angeordnet ist und dass das zweite Bauelement in der Aufnahmen nut des ersten Bauelements formschlüssig angeordnet ist.

Vorteil der Erfindung sind die aufgrund der Flexibilität der erfindungsgemäßen Verbindung erzielte Montagefreundlichkeit. Es können Fertligungstoleranzen gut ausgeglichen werden und damit Nacharbeiten oder Ausschußteile verhindert bzw. minimiert werden. Ein weiterer Vorteil der erfindungsgemäßen Lösung ist eine effektive Möglichkeit der Herstellung der Verbindung zwischen Gehäuse oder Verkleidungsteilen durch Vorfixierung eines der Bauelemente in der Aufnahmenut und anschließende Verklebung ohne Montagehilfen.

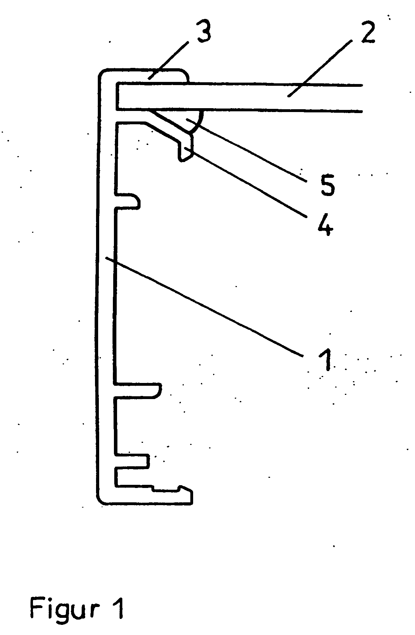

Anhand eines in Figur 1 abgebildeten Beispieles soll die Erfindung näher erläutert werden. Bauelemente 1 und 2 aus vorgeformten eloxierten Aluminiumprofilen bzw. eloxierten Aluminiumplatten für eine Haushaltseinrichtung, beispielsweise eine Dunstabzugshaube, werden, nachdem sie gereinigt und an den vorgesehenen Verbindungsstellen mit Haftvermittler beschichtet wurden, so zusammengefügt, dass das Bauelement 2 in der Aufnahmenut des Bauelementes 1 formschlüssig angeordnet wird. Die Schenkel 3 und 4 des Bauelementes 1 bilden die Aufnahmenut, wobei in dieser Ausführungsform Schenkel 4 derart ausgebildet ist, dass zwischen diesem und dem Bauelement 2 eine Aufnahmemulde entsteht, in die eine Klebstoffwulst 5 zur Verbindung der Bauelemente 1 und 2 eingebracht wird.

Die Bauelemente 1 und 2 sind vorzugsweise aus Aluminium hergestellt. Es sind jedoch auch andere Werkstoffe einsetzbar. Die Aufnahmemulde für die Klebstoffwulst 5 ist vorzugsweise keilförmig ausgebildet, es sind jedoch auch andere Formen für die Aufnahmemulde denkbar. Als Klebstoff wird in diesem Ausführungsbeispiel ein handelsüblicher Zweikomponentenkleber, z.B. CAF 99 AXAD der Firma Rhodia, eingesetzt. Es ist jedoch auch ein anderer Kleber denkbar, Voraussetzung ist eine Flexibilität des Klebers in der Klebstoffwulst 5 nach dem Aushärten. An welchen der Bauelemente 1 oder 2, die aus den Schenkeln 3 und 4 gebildete Aufnahmemulde angeordnet wird, ist für den Erfolg der erfindungsgemäßen Lösung unerheblich. Sinnvoll erscheint lediglich eine bevorzugte Anordnung des zur Bildung der Aufnahmemulde für die Klebstoffwulst 5 geformten Schenkels 4 im Inneren des Gehäuses oder der Verkleidung.

In einer weiteren Ausführungsform ist eine Anordnung der Aufnahmenut an einem der Bauelemente 1 oder 2 nur über Bereiche dieser Bauelemente denkbar. Das würde zu einer weiteren Erhöhung der Flexibilität der erfindungsgemäßen Verbindung führen, wäre jedoch in der Herstellung etwas aufwendiger.

## Patentansprüche

1. Verbindung zwischen Bauelementen für Gehäuse oder Verkleidung von Haushaltsgeräten bzw. Einrichtungen, wobei an einem ersten Bauelement (1) eine Aufnahmenut zur Anordnung eines zweiten Bauelementes (2) angeordnet ist, wobei die Aufnahmenut durch zwei Schenkel (3) und (4) gebildet wird und einer der Schenkel (3) oder (4) derart geformt ist, dass zwischen diesem und dem zweiten Bauelement (2) eine Aufnahmemulde angeordnet ist, in der eine Klebstoffwulst (5) zur Verbindung der Bauelemente (1) und (2) angeordnet ist und dass die Aufnahmemulde randseitig an einem Schenkel (3) oder (4) angeordnet ist **dadurch gekennzeichnet, dass** das zweite Bauelement (2) in der Aufnahmenut des ersten Bauelements (1) formschlüssig angeordnet ist.

2. Verbindung zwischen Bauelementen für Gehäuse oder Verkleidung von Haushaltsgeräten bzw. Einrichtungen nach Anspruch 1, **dadurch gekennzeichnet, dass** die Bauelemente (1) und (2) als Profilteile oder plattenförmige Bauteile ausgebildet sind.

3. Verbindung zwischen Bauelementen für Gehäuse oder Verkleidung von Haushaltsgeräten bzw. Einrichtungen nach Anspruch 1 und 2, **dadurch gekennzeichnet, dass** die Bauelemente (1) und (2) aus einem metallischen Werkstoff bestehen.

4. Verbindung zwischen Bauelementen für Gehäuse oder Verkleidung von Haushaltsgeräten bzw. Einrichtungen nach Anspruch 1 bis 3, **dadurch gekennzeichnet, dass** die Aufhahmemulde zwischen dem zweiten Bauelement (2) und einem der Schenkeln (3) oder (4) kerbförmig ausgebildet ist.

5. Verbindung zwischen Bauelementen für Gehäuse oder Verkleidung von Haushaltsgeräten bzw. Einrichtungen nach Anspruch 1 bis 4, **dadurch gekennzeichnet, dass** die Klebstoffwulst aus einem flexiblen Kleber besteht.

## Claims

1. Connection between components for a housing or lining of domestic appliances or items of equipment, wherein arranged at a first component (1) is a receiving groove for arrangement of a second component (2), wherein the receiving groove is formed by two limbs (3 and 4) and one of the limbs (3 or 4) is shaped in such a manner that arranged between this and the second component (2) is a receiving trough in which an adhesive bead (5) for connection of the components (1 and 2) is arranged and that the receiving trough is arranged at the edge at a limb (3 or 4), **characterised in that** the second component (2) is arranged in shape-locking manner in the receiving groove of the first component (1).

2. Connection between components for a housing or lining of domestic appliances or items of equipment according to claim 1, **characterised in that** the components (1 and 2) are constructed as profile parts or plate-shaped components.

3. Connection between components for a housing or lining of domestic appliances or items of equipment according to claim 1 and 2, **characterised in that** the components (1 and 2) consist of a metallic material.

4. Connection between components for a housing or lining of domestic appliances or items of equipment according to claim 1 to 3, **characterised in that** the receiving trough is formed in notch shape between the second component (2) and one of the limbs (3 or 4).

5. Connection between components for a housing or lining of domestic appliances or items of equipment according to claim 1 to 4, **characterised in that** the adhesive bead consists of a flexible adhesive.

## Revendications

1. Connexion entre des composants pour des boîtiers ou des revêtements d'appareils électroménagers resp. dispositifs, dans laquelle une rainure de réception est disposée sur un premier composant (1) pour y agencer un deuxième composant (2), la rainure de réception étant formée par deux ailes (3) et (4), l'une des ailes (3) ou (4) étant formée de telle sorte qu'un creux de réception dans lequel un cordon d'adhésif (5) est placé pour relier les composants (1) et (2) soit disposé entre cette aile et le deuxième élément (2) et que le creux de réception soit disposé avec son bord sur une aile (3) ou (4), **caractérisée en ce que** le deuxième composant (2) est disposé en correspondance géométrique dans la rainure de réception du premier composant (1).

2. Connexion entre composants pour des boîtiers ou des revêtements d'appareils électroménagers resp. dispositifs selon la revendication 1, **caractérisée en ce que** les composants (1) et (2) ont la forme de pièces profilées ou de composants en forme de plaque.

3. Connexion entre des composants pour des boîtiers ou des revêtements d'appareils électroménagers resp. dispositifs selon les revendications 1 et 2, **caractérisée en ce que** les composants (1) et (2) sont réalisés en un matériau métallique.

4. Connexion entre des composants pour des boîtiers ou des revêtements d'appareils électroménagers resp. dispositifs selon les revendications 1 à 3, **caractérisée en ce que** le creux de réception entre le deuxième composant (2) et l'une des ailes (3) ou (4) est configuré en biseau.

5. Connexion entre des composants pour des boîtiers ou des revêtements d'appareils électroménagers resp. dispositifs selon les revendications 1 à 4, **caractérisée en ce que** le cordon d'adhésif est constitué d'un adhésif souple.
